**Europäisches Patentamt**

(19) **European Patent Office**

**Office européen des brevets**

(11) Veröffentlichungsnummer: **0 037 565**
**B1**

(12) **EUROPÄISCHE PATENTSCHRIFT**

(45) Veröffentlichungstag der Patentschrift:
23.07.86

(51) Int. Cl.⁴: **B 60 T 13/58**, B 60 T 13/66,
B 60 L 7/24

(21) Anmeldenummer: **81102509.7**

(22) Anmeldetag: **03.04.81**

(54) Regeleinrichtung für druckmittelgesteuerte Bremsen von Fahrzeugen mit automatischer Bremssteuerung.

(30) Priorität: **03.04.80 DE 3013197**

(43) Veröffentlichungstag der Anmeldung:
**14.10.81 Patentblatt 81/41**

(45) Bekanntmachung des Hinweises auf die Patenterteilung:
**23.07.86 Patentblatt 86/30**

(84) Benannte Vertragsstaaten:
**AT CH DE FR GB LI SE**

(56) Entgegenhaltungen:
**SIEMENS ZEITSCHRIFT, Nr. 6, Juni 1965, Seiten 595-600, Erlangen, DE; A. ASSMUS: "Fahr- und Bremssteuerung der Lokomotive E 03"**
**EISENBAHNTECHNISCHE RUNDSCHAU, Band 29, November 1980, Seiten 775-779, Darmstadt, DE; K.-J. GOTTHARDT: "Einsatz von Mikrocomputern auf Triebfahrzeugen"**

(73) Patentinhaber: **KNORR- BREMSE AG, Moosacher Strasse 80 Postfach 401060, D-8000 München 40 (DE)**
Patentinhaber: **Siemens Aktiengesellschaft, Berlin und München Wittelsbacherplatz 2, D-8000 München 2 (DE)**

(72) Erfinder: **Gerum, Eduard, Dr., Strassbergerstrasse 32, D-8000 München 40 (DE)**
Erfinder: **Kessel, Gerd, Dr., Parksiedlung 8, D-8031 Geiselbullach (DE)**
Erfinder: **Gotthardt, Klaus- Jürgen, Auracher Strasse 10, D-8521 Untermembach (DE)**
Erfinder: **Lichtenstein, Lothar, Ebnerstrasse 13, D-8520 Erlangen (DE)**

**0 037 565**

**Beschreibung**

Die Erfindung betrifft eine Regeleinrichtung für druckmittelgesteuerte Bremsen von Fahrzeugen mit automatischer Bremssteuerung, insbesondere spurgebundenen Fahrzeugen, wobei die Regeleinrichtung einen Beschleunigungsregler enthält Bei bekannten Regeleinrichtungen dieser Art mit automatischen Fahr-Bremssteuerungen (AFB) für lokomotivbespannte Züge, insbesondere für Züge mit rein pneumatischer Zugbremse, verfügt die Lok üblicherweise über eine generatorische Bremse und eine pneumatische Ergänzungsbremse. Die Zugbremse wird über eine konventionelle pneumatische Zugsteuerleitung angesteuert. Die AFB regelt die Geschwindigkeit und Beschleunigung des Zuges durch Regelung des Antriebes und durch Betätigung von Lok- und Zugbremse. Für die beiden Bremsen sind hierbei getrennte Regler vorgesehen (vgl. Zeitschrift "Elektrische Bahnen", 1972, Heft 7, Seite 155). Der Regler für die elektrische Bremse (E-Bremse) bereitet keine größeren Schwierigkeiten, da die E-Bremse relativ exakt und ohne besondere Zeitverzögerung auf ein Steuersignal reagiert. Die pneumatische Zugbremse (P-Bremse) bereitet dagegen Schwierigkeiten, da erhebliche Zeitverzögerungen, vor allem durch die pneumatische Zugsteurleitung, enstehen. Hierzu kommt noch die im Steurventil eingebaute Druckanstiegs- bzw. Druckabfallsbegrenzung als zusätzliche Zeitverzögerung. Insbesondere bei einer Bremskraft- bzw. Verzögerungsregelung von Güterzügen treten hierdurch erhebliche Probleme auf.

Aufgabe der vorliegenden Erfindung ist es, die Regler für eine Bremskraft- bzw. Verzögerungsregelung derart auszubilden, daß die oben geschilderten Probleme überwunden werden, d.h. daß der Einfluss von Zeitverzögerungen der pneumatischen Bremse bei Ansteuerung über elektrische Regler verringert wird.

Diese Aufgabe wird durch die im Kennzeichenteil des Patentanspruches 1 angegebenen Merkmale gelöst.

Als Regler für die Verzögerungs- bzw. Beschleunigungsregelung wird ein in verschiedenen Punkten ergänzter bzw. modifizierter Proportional-Integral-Differential-Regler (PID-Regler) verwendet. Der Verzögerungsregler erhält hierbei sein Sollwertsignal $b_{soll}$ aus einem Geschwindigkeitsregler und sein Istwertsignal $b_{ist}$ aus einem Differenzierer, dessen Eingang ein der Zuggeschwindigkeit proportionales Signal zugeführt wird. Eine Modifikation des PID-Reglers bestht darin, Daß sein Integralanteil durch einen Begrenzer in seinem zeitlichen Anstieg bzw. Abfall begrenzt ist. Kennzeichnend für die Dynamik einer pneumatischen Bremse ist die maximale Druckänderungsgeschwindigkeit, die durch das Steuerventil vorgegeben wird. Auch bei gedachter sprungförmiger Änderung des Druckes in der Hauptluftleitung verläuft der Bremszylinderdruck daher mit einem festen Gradienten, da das Steuerventil näherungsweise als Dreipunktregler arbeitet. Zur Anpassung an dieses Verhalten ist die maximale Änderungsgeschwindigkeit des Integralanteils des Reglersignales begrenzt, um bei großen Regelabweichungen ein übermäßiges Vorauseilen des Integralanteiles und damit auch der Stellgröße gegenüber der Regelgröße zu vermeiden. Wichtig ist, daß nicht die Änderungsgeschwindigkeit des gesamten Reglerausgangsignals begrenzt wird, sondern die des Integralanteiles, da andernfalls der Proportionalanteil des PID-Reglers mitbetroffen wäre, was zu unnötiger Verzögerung im Ansprechen der Bremse führen würde.

Eine einfache Realisierung für die Begrenzung der Änderungsgeschwindigkeit des Integralanteiles besteht darin, daß das Eingangssignal des Integrierers für positive als auch negative Werte begrenzt wird.

Zur Anpassung des Reglers an die unterschiedliche Dynamik der pneumatischen Bremse beim Bremsen und Lösen kann die Begrenzung für positive und negative Signale unterschiedlich groß sein, so daß zum Beispiel in Richtung Lösen eine stärkere Begrenzung wirkt als in Richtung Bremsen.

Weiterhin kann diese Begrenzung abhängig von der Zugart sein, z.B. ob es sich um einen Güterzug oder einen Personenzug handelt oder von weiteren Zugdaten, wie z.B. der Zuglänge. Eine Realisierung, die die unterschiedlichen Begrenzungsschwellen für positive und negative Signale liefert, verändert das begrenzte Integrierer-Eingangssignal in Abhängigkeit vom Vorzeichen der Regelabweichung mittels eines Umschalters, der das begrenzte Signal über einen Multiplizierer führt oder direkt zum Eingang des Integrierers leitet.

Eine weitere Modifikation des PID-Reglers besteht darin, daß der Anfangswert des Integralanteiles beim Ansprechen des PID-Reglers auf einen Wert gesetzt wird, der dem momentanen Sollwert der Bremsanforderung zum Zeitpunkt des Ansprechens des PID-Reglers entspricht.

Beim ersten Einschalten der Bremse muß die Regelung unwirksam sein, da durch die Beschleunigungseinrichtungen der Steuerventile der Bremsdruck auf einen Wert springt, der unabhängig von der vorgegebenen Steuergröße ist. Da die Bremse in dieser Anfangsphase nahezu nicht auf die Steuergröße reagiert, wird der PID-Regler bis zum Erreichen eines Ansprungwertes unwirksam geschaltet. Dieser Ansprungwert wird nach einer fest vorgegebenen Zeit erreicht, nach deren Abläuf der PID-Regler wirksam geschaltet wird. Zur Vermeidung eines Sprunges der Reglerausgangsgröße gegenüber dem zuvor erreichten Ansprungwert wird der Anfangswert des Integrierers des PID-Reglers auf diesen Ansprungwert gesetzt, so daß bei Einsetzen der Regelung Druck und Reglerzustand übereinstimmen. Ohne diese Maßnahme wäre der Integralanteil Null, und der Regler würde, wenn keine zusätzliche Regelabweichung vorläge, den Druck unmittelbar reduzieren.

Eine weitere Modifikation des PID-Reglers besteht darin, daß sein D-Anteil nur dann wirksam ist, wenn der Absolutwert der Regelabweichung abnimmt. Der D-Anteil wird somit als Dämpfungselement verwendet. Üblicherweise wird der D-Anteil in einer Regelung dazu verwendet, die Dynamik der Regelung zu erhöhen bzw. anzufachen. Dies wäre jedoch bei der Regelung der pneumatischen Bremse mit einer langen Zugsteuerleitung nicht sinnvoll. Um Übersteuerungen zu vermeiden, muß abhängig vom Gradienten der Regelgröße (Verzögerung) frühzeitig die Steuergröße (z.B. Steuerdruck des Führerbremsventils) angehalten werden, obwohl die Regelabweichung noch bedeutend ist. Um dies zu erreichen, wird das Differenzierglied des PID-Reglers nur dann

2

wirksam, wenn der Absolutwert der Regelabweichung sich verringert, so daß Soll- und Istwert der Regelgröße sich einander nähern. Bei größerwerdendem Absolutwert der Regelabweichung wirkt das Differenzierglied dagegen nicht.

Vorteilhafte Ausgestaltungen und Weiterbildungen der Erfindung sind den Unteransprüchen zu entnehmen. Im Folgenden wird die Erfindung anhand eines Ausführungsbeispieles bei Anwendung bei einer automatischen Fahr-Bremssteuerung im Zusammenhang mit der Zeichnung ausführlicher beschrieben. Es sei jedoch betont, daß die Erfindung im allgemeinen bei automatischen Bremssteuerungen für druckmittelgesteuerte Bremsen von Fahrzeugen anwendbar ist und nicht auf die Anwendung bei einer automatischen Fahr-Bremssteuerung beschränkt ist.

Figur 1 ein Blockschaltbild einer automatischen Fahr-Bremssteuerung; und

Figur 2 eine detailliertere Darstellung der in Fig. 1 gezeigten Regler für die pneumatische Zugbremse.

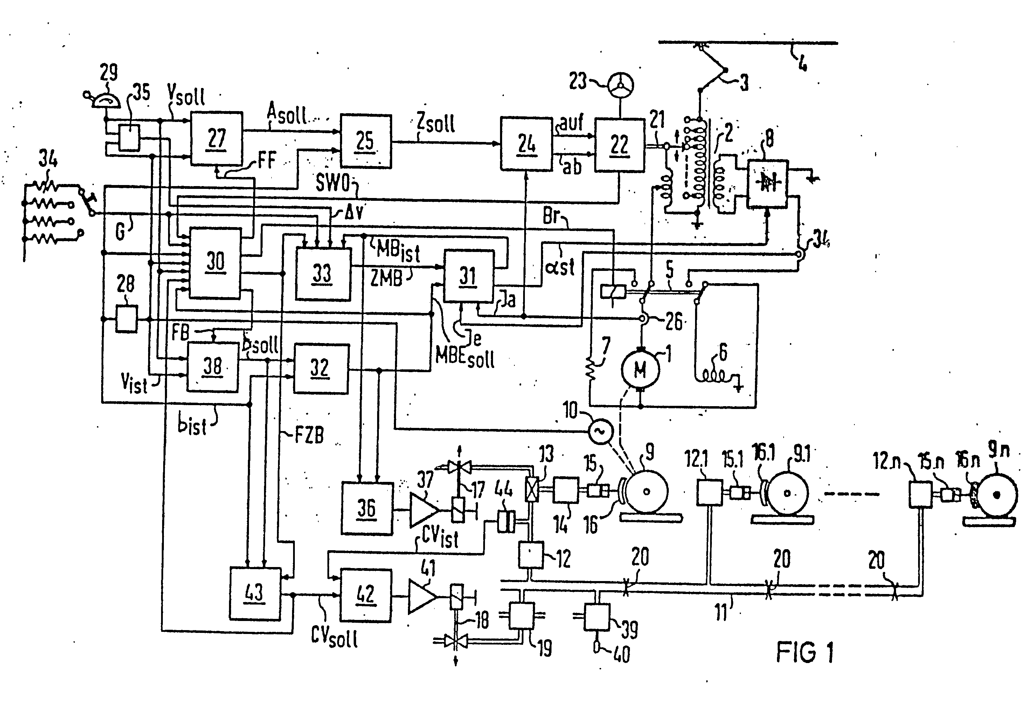

In Fig. 1 ist ein Fahrmotor 1 ankerseitig über einen mit Wicklungszapfungen versehenen Transformator 2 und einen am Triebfahrzeug angebrachten Stromabnehmer 3 mit dem Fahrdraht 4 verbunden. Über den Fahrbremsschalter 5 ist die Erregerwicklung 6 im Fahrbetrieb an Erde gelegt. Im Bremsbetrieb wird der Schalter 5 umgeschaltet, so daß der Ankerkreis des Fahrmotors 1 über den Bremswiderstand 7 geschlossen wird und der Erregerstromrichter 8, der vom Transformator 2 gespeist wird, an die Erregerwicklung 6 geschaltet wird. Der Fahrmotor 1 wirkt auf Antriebsräder 9, an denen eine Tachomaschine 10 angebracht ist.

Zum pneumatischen Bremsen ist in bekannter Weise eine Hauptluftleitung 11 durch den Zug verlegt, an der über Steuerventile 12, in der Lokomotive über ein Doppelrückschlagventil 13, einen Druckübersetzer 14 ein Druckzylinder 15 angeschlossen ist, der auf die Bremsklötze 16 wirkt. Speziell bei Lokomotiven erfolgt über ein Regelmagnetventil 17 und das Doppelrückschlagventil 13 eine direkte Ansteuerung des Druckübersetzers 14 und zwar als Druckluftergänzungsbremse.

Zur Ansteuerung der Zugbremse ist ein Regelmagnetventil 18 vorgesehen, welches über ein Relaisventil 19 den Druck der Hauptluftleitung 11 beeinflußt.

Die Hauptluftleitungen der an die Lokomotive angehängten Wagen sind bei 20 miteinander verbunden. In den Wagen 1 bis n sind an die Hauptluftleitung 11 Steuerventile 12.1 bis 12.n angeschlossen. Diese wirken auf Bremszylinder 15.1 bis 15.n, die ihre Kraft auf die Bremsklötze 16.1 bis 16.n übertragen und die Räder 9.1 bis 9.n bremsen. Zum wahlweisen Verbinden des Fahrmotors mit einer Anzapfung des Transformators 2 dient ein Schaltwerk 21, das über eine Schaltwerksteuerung 22 von einem Fahrschalter 23 betätigt werden kann.

Bei der automatischen Fahr-Bremssteuerung wird das Schaltwerk 22 durch einen Zugkraftregler 24 über die Leitungen "Schaltwerk auf" und "Schaltwerk ab" angesteuert. Den Sollwert $Z_{soll}$ erhält der Zugkraftregler 24 von einem Beschleunigungsregler 25 für den Fahrbetrieb und den Istwert Ja von dem Wandler 26. Der Beschleunigungsregler 25 für Fahren erhält seinerseits einen Sollwert $A_{soll}$ von einem Geschwindigkeitsregler 27 und einen Beschleunigungswer $b_{ist}$ von einem Differenzierglied 28, welches die Istgeschwindigkeit $V_{ist}$ der Tachomaschine 10 differenziert. Der Geschwindigkeitsregler 27 für den Fahrbetrieb erhält seinen Sollwert $V_{soll}$ von einem Geschwindigkeitssollwertgeber 29. Einem Istwerteingang wird die Istgeschwindigkeit $V_{ist}$ der Tachomaschine 10 zugeführt. Der Geschwindigkeitsregler 27 wird über einen Freigabeeingang "Fahren" von der Steuerlogik 30 beeinflußt.

Beim elektrischen Bremsen mit dem Triebfahrzeug wird der Bremserregergleichrichter 8 von einem Bremsmomentenregler 31 über die Steuerleitung $\alpha$st angesteuert. Der Sollwert für den Bremsmomentenregler 31 wird in einem Beschleunigungsregler 32 für die elektrische Bremse gewonnen. Zusätzlich erhält der Bremsmomentenregler 31 einen Zusatzsollwert ZMB von einer Konstantwertzuschalteinrichtung 33. Die Istwerte für den Bremsmomentenregler 31 Ja für den Ankerstrom und Je für den Erregerstrom werden in den Wandlern 26 und 34 gewonnen. Der aus den Werten Ja und Je im Bremsmomentenregler 31 gewonnene Bremsmomentenistwert $MB_{ist}$ wird der Konstantwertzuschaltungseinrichtung 33 zugeführt. Außerdem erhält diese Einrichtung 33 ein Signal von einem Einsteller 34', der die Zugmasse vom Lokführer eingestellt vorgibt und ein Signal $\Delta v$, welches in einem Differenzbildner 35 aus der Sollgeschwindigkeit $V_{soll}$ und der Istgeschwindigkeit $V_{ist}$ gebildet wird. Das Signal des Einstellers 34 wird auch der Steuerlogik 30 zugeführt.

Wenn die elektrische Bremse des Triebfahrzeuges keine ausreichende Bremskraft - bedingt durch die Kennlinie - mehr aufbringen kann, wird die pneumatische Zugbremse und die Ergänzungsbremse der Lokomotive angesteuert. Zur Ansteuerung der Ergänzungsbremse erhält der Bremsregler 36 für die Ergänzungsbremse den Sollwert $MBE_{soll}$ vom Beschleunigungsregler 32 und den Istwert der elektrischen Bremse $MB_{ist}$ aus dem Bremsmomentregler 31. Das Ausgangssignal des Bremsreglers 36 für Ergänzungsbremse wird über einen Verstärker 37 dem Regelmagnetventil 17 zugeführt, welches die Ergänzungsbremse des Triebfahrzeuges ansteuert. Der Verzögerungsregler 32 erhält als Eingangsgrößen den Wert $b_{soll}$ aus einem Geschwindigkeitsregler 38 für den Bremsbetrieb und den Beschleunigungsistwert $b_{ist}$ aus dem Differenzierglied 28. Der Geschwindigkeitsregler 38 für den Bremsbetrieb erhält einerseits als Sollwert den Geschwindigkeitssollwert $V_{soll}$ vom Geschwindigkeitsgeber 29 und die Istgeschwindigkeit $V_{ist}$ von der Tachomaschine 10. Ein weiterer Eingang des Geschwindigkeitsreglers 38 für den Bremsbetrieb kommt von der Steuerlogik 30 und gibt den Bremsbetrieb frei.

Die pneumatische Bremse des Zuges wird - wie oben beschrieben - durch die Hauptluftleitung 11 beeinflußt. Die Ansteuerung der Hauptluftleitung 11 erfolgt bei Handbetrieb über das Führerbremsventil 39, das mit einem Handhebel 40 versehen ist oder im automatischen Betrieb über das Relaisventil 19 und das Regelmagnetventil 18. Dieses Regelmagnetventil 18 wird über einen Verstärker 41 und den Bremskraftregler 42 für den pneumatischen Bremsbetrieb angesteuert. Den Sollwert $CV_{soll}$ erhält der Bremskraftregler 42 für die Druckluftbremse von dem

3

Verzögerungsregler 43 für die Zugbremse, der außerdem der Steuerlogik 30 zugeführt wird.

Der Istwert $CV_{ist}$ wird aus dem Vorsteuerbremszylinderdruck des Steuerventils 12 der Lokomotive gewonnen. Der Verzögerungsregler 43 für die Zugbremse erhält seine Eingangswerte wie der Verzögerungsregler 32 für die elektrische Bremse von dem Differenzierglied 28 und dem Geschwindigkeitsregler 38 für den Bremsbetrieb.

Weiterhin erhält der Verzögerungsregler 43 auch ein Freigabesignal von der Steuerlogik 30.

Die Steuerlogik 30 gewinnt aus den ihr zugeführten Signalen u.a. auch ein Signal Br für den Fahrbremswender 5, welches die elektrischen Einrichtungen des Triebfahrzeuges vom Fahrbetrieb auf Bremsbetrieb umschaltet. Von der Schaltwerksteuerung 22 erhält die Steuerlogik 30 noch das Signal SWO, das die Nullstellung des Schaltwerkes signalisiert.

Wird anstelle des Schaltwerkes ein Stromrichter verwendet, so wird die Stromrichterregelung von dem Zugkraftregler 24 angesteuert.

Bei der automatischen Fahr-Bremssteuerung sind die Beschleunigungsregler 25 für "Fahren" und die Beschleunigungsregler für "Bremsen", ebenso die Verzögerungsregler 32 für elektrisches Bremsen und Verzögerungsregler 43 für pneumatisches Bremsen des Zuges getrennt ausgeführt, um das dynamische Verhalten der einzelnen Kreise getrennt optimal abstimmen zu können. Die Steuerlogik 30 übernimmt dabei die zeitlich parallele Ansteuerung der Beschleunigungsregler 32 und 43 gemäß einer vorgegebenen Funktion zur optimalen Aufteilung der Bremskräfte zwischen elektrischer und pneumatischer Bremse. Diese Aufteilung ist Gegenstand einer gleichrangigen Patentanmeldung und soll hier nicht näher beschrieben werden.

Stehen weitere, in Fig. 1 nicht dargestellte Bremssysteme zur Verfügung, so erhalten diese eigene Beschleunigungsregler, so daß auch diese Regelkreise optimal abgestimmt werden können. Auch in diesem Fall kann eine Ansteuerung über die Steuerlogik zeitlich parallel erfolgen.

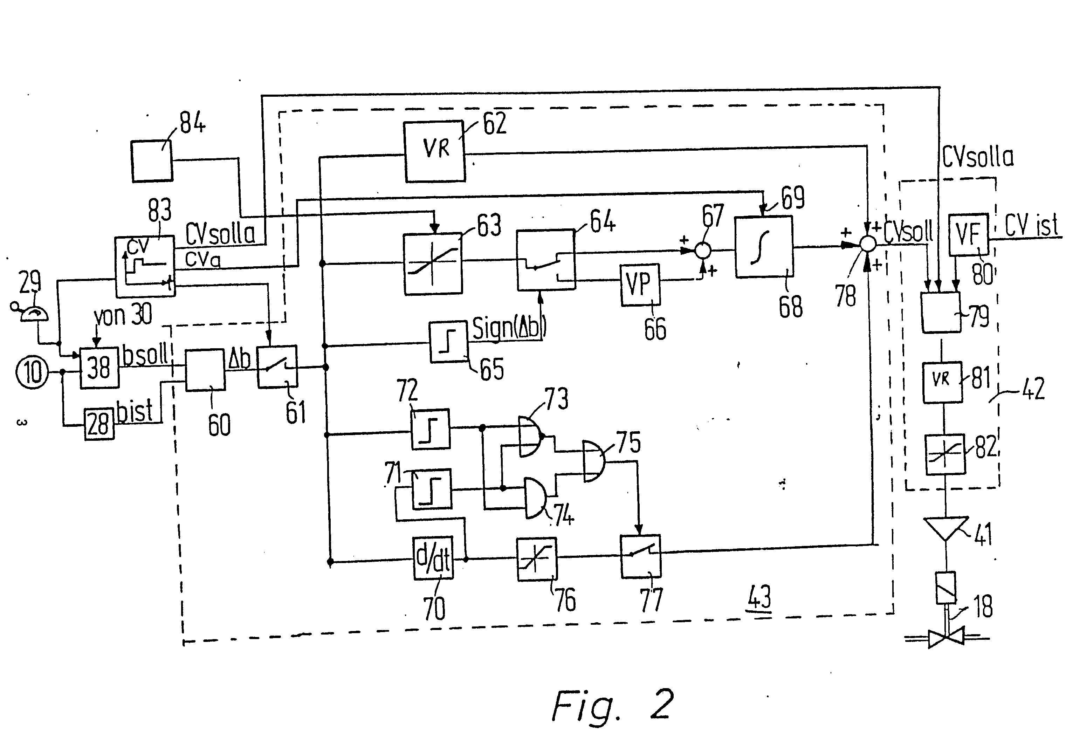

Figur 2 zeigt eine detailliertere Darstellung der in Fig. 1 gezeigten Regler für die pneumatische Zugbremse. Das aus der Tachomaschine 10 stammende Istwertsignal der Geschwindigkeit gelangt in den Geschwindigkeitsregler 38, der das Sollwertsignal für die Beschleunigung $b_{soll}$ an den Beschleunigungsregler 43 abgibt. In dem Differenzierer 28 wird das Signal $V_{ist}$ differenziert und als Istwertsignal der Beschleunigung $b_{ist}$ dem Beschleunigungsregler 43 zugeführt. Das Sollwertsignal für die Geschwindigkeit stammt von dem Geschwindigkeitssollwertgeber 29 und wird ebenfalls dem Geschwindigkeitsregler 38 zugeführt. Die Signale $b_{soll}$ und $b_{ist}$ werden einem Differenzbildner 60 zugeleitet, der das Regelabweichungssignal der Beschleunigung 4b über einen gesteuerten Schalter 61 den P-, I- und D-Anteilen des PID-Reglers zuführt. Der Proportionalzweig des Reglers enthält einen Proportionalverstärker 62 mit dem Verstärkungsfaktor VR.

Der Integral-Zweig des Reglers enthält einen Begrenzer 63, dem das Signal Δb zugeführt wird. Der Ausgang des Begrenzers 63 ist über einen Umschalter 64 wahlweise direkt mit einem Addierer 67 oder über einen Multiplizierer 66 mit dem Addierer 67 verbindbar. Der Multiplizierer 66 multipliziert sein Eingangssignal mit einem Faktor VP. Die Steuerung des Umschalters 64 erfolgt in Abhängigkeit von dem Vorzeichen der Regelabweichung Δb. Hierzu wird das Signal Δb einem Vorzeichenbestimmer 65 zugeführt, dessen Ausgang mit dem Steuereingang des Umschalters 64 verbunden ist.

Der Ausgang des Addierers 67 ist mit einem Integrierer 68 verbunden, dessen Ausgang mit einem Anschluß eines Addierers 78 verbunden ist. Ein Anfangswertanschluß des Integrierers 68 ist mit einem Ansprungwertgeber 83 verbunden, der weiter unten erläutert wird.

Der Differentialzweig des Reglers enthält einen Differenzierer 70, dem das Signal Δb zugeführt wird. Weiterhin ist ein Vorzeichenbestimmer 72 vorgesehen, dem ebenfalls das Signal Δb zugeführt wird. Einem weiteren Vorzeichenbestimmer 71 wird das Ausgangssignal des Differenzierers 70 zugeführt. Die Ausgänge der beiden Vorzeichenbestimmer werden jeweils zwei Eingängen eines NOR-Gatters 73 und eines UND-Gatters 74 zugeführt. Die Ausgänge der beiden Gatter 73 und 74 werden einem ODER-Gatter 75 zugeführt, dessen Ausgang mit einem Steuereingang eines Schalters 77 verbunden ist. Der Ausgang des Differenzierers 70 ist mit einem Begrenzer 76 verbunden, dessen Ausgang mit dem Eingang des Schalters 77 verbunden ist. Der Ausgang des Schalters 77 ist mit einem Anschluß des Addierers 78 verbunden.

Auch der Ausgang des Proportionalverstärkers 62 ist mit einem Eingang des Addierers 78 verbunden. Der Ausgang des Addierers 78 liefert das Reglerausgangssignal $CV_{soll}$, das dem Bremskraftregler 42 zugeführt wird. Der Bremskraftregler 42 enthält einen Differenzbildner 79, dem das Signal $CV_{soll}$, ein Signal für das Ansprungverhalten $CV_{solla}$ und das Signal $CV_{ist}$ (in modifizierter Form) zugeführt wird. Das Signal $CV_{ist}$ wird in einem Multiplizierer 80 mit einem Faktor VF multipliziert. Der Ausgang des Differenzbildners ist mit einem proportionalen Verstärker 81 verbunden, dessen Ausgang seinerseits mit einem Begrenzer 82 verbunden ist. Der Ausgang des Begrenzers 82 wird dem Verstärker 41 zugeführt, dessen Ausgangsgröße das Regelmagnetventil 18 steuert.

Wie oben angedeutet, ist noch ein Ansprungwertgeber 83 vorgesehen, der bei einer ersten Bremskraftanforderung ein zeitlich begrenztes Signal $CV_{solla}$ für das Ansprungverhalten abgibt. Nach Ablauf einer vorbestimmten Zeitdauer schaltet der Ansprungwertgeber 83 ab und erzeugt zu diesem Moment ein Steuersignal, das den Schalter 61 schließt, so daß der Regler 43 zum Einsatz kommt. Ein dem Ansprungwert zum Zeitpunkt des Schliessens des Schalters 61 entsprechender Wert wird von dem Ansprungwertgeber 83 dem Anfangswerteingang 69 des Integrierers 68 zugeführt.

Schließlich ist noch ein Zugartsteller 84 vorgesehen, mit dem die Schwellwerte des Begrenzers 63 eingestellt werden können.

Im Folgenden wird die Arbeitsweise der in Fig. 2 dargestellten Regler beschrieben. Solange das Fahrzeug ungebremst fährt, ist der Schalter 61 geöffnet und der Regler 43 unwirksam. Bei einer ersten Bremsanforderung über den Geschwindigkeitssollwertgeber 29 wird der Ansprungwertgeber 83 aktiviert und erzeugt, unabhängig von der Höhe der Bremsanforderung, einen zeitlich vorgegebenen Sollwertverlauf. Der entsprechende Sollwert $CV_{solla}$ wird dem Bremskraftregler 42 zugeführt, was letztlich zu einer Betätigung des Regelmagnetventiles 18 führt.

Nach Ablauf der in dem Ansprungwertgeber 83 fest vorgegebenen Zeitdauer wird der Schalter 61 geschlossen. Das Regelabweichungssignal $\Delta b$ wird den P-, I- und D-Zweigen des Reglers 43 zugeführt. In dem Begrenzer 63 wird es begrenzt, wodurch die Anstiegs- bzw. Abfallgeschwindigkeit des Ausgangssignales des Integrierers 68 ebenfalls begrenzt wird. In Abhängigkeit von dem Vorzeichen des Signales $\Delta b$ wird der Schalter 64 geschaltet, wodurch je nach Anforderung zum Bremsen oder Lösen das Regelabweichungsteil direkt oder abgeschwächt (Multiplizierer 66) dem Integrierer 68 zugeführt wird. Dieser Integrierer integriert dann von dem an seinen Anschluß 69 angelegten Anfangswert und gibt den Integralanteil des Signales $CV_{soll}$ ab.

In dem D-Zweig des Reglers wird das Signal $\Delta b$ differenziert und begrenzt. Die Logik 71 bis 75 sorgt dafür, daß der D-Zweig nur dann ein Ausgangssignal abgibt, wenn sich der Absolutwert der Regelabweichung verringert. Der Schalter 77 ist dann geöffnet, wenn Regelabweichung $\Delta b$ und die zeitliche Abweichung der Regelabweichung gleiches Vorzeichen haben.

Im Folgenden soll noch auf die Verfälschung des Istwertes für den Bremskraftregler 42 eingegangen werden. Da der Zusammenhang zwischen elektrischer Steuergröße und Bremszylinderdruck aufgrund der Hysterese der Stellelemente und deren Nullpunktverschiebung relativ ungenau erfaßbar ist, tritt bei herkömmlichen Bremskraftreglern eine relativ große Verfälschung auf.

Andererseits kann der Verstärkungsfaktor der Regelstrecke, die aus dem Führerbremsventil und dem Steuerventil der Lok besteht, nur in relativ engen Grenzen schwanken. Es wird daher vorgeschlagen, den Proportionalanteil des Bremskraftreglers mit um einen Faktor VF verfälschtem Istwert zu bilden. Hierdurch erhält man bei Vernachlässigung der Dynamik, bei einer Proportionalverstärkung VR und der Streckenverstärkung VS folgende Übertragungsfunktion zwischen Soll- und Istwert:

$$IST = VR. VS. (SOLL - IST - VF)$$

beziehungsweise

$$\frac{IST}{SOLL} = \frac{VR \cdot VS}{1 + VR \cdot VS \cdot VF}$$

Damit IST = SOLL wird, ist der Faktor VF wie folgt zu wählen:

$$VF = 1 - \frac{1}{VR \cdot VS}$$

Dies bedeutet, daß mit relativ geringer Reglerverstärkung eine gute statische Genauigkeit der Regelung allein durch den Proportionalregler erreicht werden kann. Dies ist wichtig, damit bei großen Regelabweichungen eine Übersteuerung der Stellgröße vermieden werden kann, ohne Regelgenauigkeit zu verlieren.

Eine Übersteuerung (z.B. in Führerbremsventllen) kann problematisch sein, da der Steuerdruck des Führerbremsventils in Richtung Bremsen dynamisch begrenzt ist, nicht jedoch in Richtung Lösen.

Weiterhin ist von Vorteil, daß zusätzliche Korrekturelemente in Form eines Integralanteils gering gehalten werden können, da diese Anteile nur mit relativ großer zeitlicher Verzögerung eingreifen können.

Für den Grenzfall VR. VS = 1 hat diese Regelung die gleichen Eigenschaften wie eine Steuerung, da dann VF = Null und somit die Rückführung des Istwerts entfällt.

Abweichungen der Streckenverstärkung VS, die im übrigen annäherungsweise bekannt sein muß, vom angenommenen Wert um einen Faktor K werden vom Regler abhängig von der Größe VR. VS abgeschwächt. Der Übertragungsfaktor verfälscht sich durch den Faktor K zu

$$\frac{IST}{SOLL} = \frac{K \cdot VR \cdot VS}{1 - K + K \cdot VR \cdot VS}$$

Bei K = 0,9 ergibt sich belsplelsweise mit VR. VS = 5 ein Übertragungsfaktor von 0,978. Dies bedeutet, daß eine Abweichung der Streckenverstärkung von 10 % auf 2,2 % verringert wird.

Sämtliche aus der Beschreibung, den Ansprüchen und den Zeichnungen hervorgehenden Merkmale und Vorteile der Erfindung, einschließlich konstruktiver Einzelheiten und räumlicher Anordnungen, können sowohl für sich als auch in beliebiger Kombination erfindungswesentlich sein.

## 0 037 565

**Patentansprüche**

1. Regeleinrichtung für druckmittelgesteuerte Bremsen von Fahrzeugen mit automatischer Bremssteuerung, insbesondere spurgebundenen Fahrzeugen, wobei die Regeleinrichtung einen Beschleunigungsregler (43) enthält, dadurch gekennzeichnet, daß der Beschleunigungsregler (43) ein PID-Regler ist, daß der Integralanteil des PID-Reglers durch einen Begrenzer (63) in seinem zeitlichen Anstieg bzw. Abfall begrenzt ist, daß der Anfangswert des Integralanteiles bei Ansprechen des PID-Reglers auf einen Wert gesetzt wird, der dem momentanen Sollwert der Bremsanforderung zum Zeitpunkt des Ansprechens des PID-Reglers entspricht, und daß der Differentialanteil des PID-Reglers nur dann wirksam ist, wenn der Absolutwert der Regelabweichung abnimmt.

2. Regeleinrichtung nach Anspruch 1, dadurch gekennzeichnet, daß der Beschleunigungsregler (43) erst dann anspricht, wenn nach einer Bremsanforderung eine vorgegebene Zeitdauer verstrichen ist.

3. Regeleinrichtung nach Anspruch 2, dadurch gekennzeichnet, daß ein Ansprungwertgeber (83) vorgesehen ist, der nach einer Bremsanforderung einen Sollwert abgibt, dessen zeitlicher Verlauf einer vorgegebenen Funktion folgt und der nach Ablauf einer vorgegebenen Zeitdauer ein Steuersignal abgibt, das den Beschleunigungsregler (43) wirksam schaltet.

4. Regeleinrichtung nach Anspruch 3, dadurch gekennzeichnet, daß der Anfangswert des Integralanteiles des PID-Reglers auf dem Ausgangswert des Ansprungwertgebers (83) zum Zeitpunkt des Auftretens des Steuersignales gesetzt wird.

5. Regeleinrichtung nach einem oder mehreren der Ansprüche 1 bis 4, dadurch gekennzeichnet, daß der Begrenzer (63) für positive und negative Eingangssignale unterschiedliche Begrenzungsschwellwerte aufweist.

6. Regeleinrichtung nach Anspruch 5, dadurch gekennzeichnet, daß der Begrenzer (63) sein Eingangssignal bei einer Anforderung zum Bremsen geringer begrenzt als bei einer Anforderung in Richtung Lösen der Bremse.

7. Regeleinrichtung nach den Ansprüchen 5 bis 6 für spurgebundene Fahrzeuge, dadurch gekennzeichnet, daß die Wirkung des Begrenzers (63) in Abhängigkeit von der Zugart, der Zuglänge bzw. dem Zuggewicht einstellbar ist.

8. Regeleinrichtung nach einem oder mehreren der Ansprüche 1 bis 7, dadurch gekennzeichnet, daß das Eingangssignal für den Integralanteil des PID-Reglers in Abhängigkeit von dem Vorzeichen der Regelabweichung abgeschwächt bzw. verstärkt wird.

9. Regeleinrichtung nach Anspruch 1, dadurch gekennzeichnet, daß der Differentialanteil des PID-Reglers nur dann unwirksam bzw. in seiner Wirkung stark reduziert wird, wenn bei positiver Regelabweichung ihre zeitliche Ableitung positiv ist oder wenn bei negativer Regelabweichung ihre zeitliche Ableitung negativ ist.

10. Regeleinrichtung nach Anspruch 1, dadurch gekennzeichnet, daß für den Differentialanteil des PID-Reglers ein Begrenzer (76) vorgesehen ist.

11. Regeleinrichtung nach Anspruch 1, dadurch gekennzeichnet, daß das Istwertsignal eines dem Beschleunigungsregler (43) nachgeschalteten Bremskraftreglers (42) um einen Faktor(VF)verfälscht wird.

12. Regeleinrichtung nach Anspruch 11, dadurch gekennzeichnet, daß ein Multiplizierer (80) vorgesehen ist, der das Istwertsignal mit dem Faktor (VF) multipliziert.

13. Regeleinrichtung nach Anspruch 11, dadurch gekennzeichnet, daß das Ausgangssignal des Bremskraftreglers (42) durch einen Begrenzer (82) begrenzt ist.

14. Regeleinrichtung nach Anspruch 1 - 13 bei Anwendung in einer automatischen Fahr-Bremssteuerung, dadurch gekennzeichnet, daß bei kombinierter, getrennter, elektrischer und druckmittelbetätigter Bremse ein eigener Beschleunigungsregler (43) für die druckmittelgesteuerte Bremse vorgesehen ist, der zwischen einem Geschwindigkeitsregler (38) und einem Bremskraftregler (42) geschaltet ist, wobei die Regeleinrichtungen für die elektrische Bremse und die druckmittelbetätigte Bremse über eine Steuerlogik miteinander verknüpft sind.


**Claims**

1. Control system for fluid-actuated brakes of vehicles with automatic brake control, particularly for rail-bound vehicles, comprising an acceleration controller (43), in which the acceleration controller (43) is a PID controller, in which the integral component of the PID controller is limited in its rise and fall times by a limiter (63), in which the initial value of the integral component is set, at the moment the PID controller operates, to a value corresponding to the instantaneous desired value of the brake demand at the moment the PID controller operates, and in which the differential component of the PID controller is only effective when the absolute value of the control deviation falls.

2. Control system as defined in Claim 1, in which the acceleration controller (43) only operates after a fixed length of time after a brake demand signal.

3. Control system as defined in Claim 2, in which there is a starting value generator (83) which produces in response to a brake demand signal a desired value having a time curve with a pre-determined function and delivering at the end of a pre-determined duration a control signal which makes the acceleration controller (43) go active.

4. Control system as defined in Claim 3, in which the initial value of the integral component of the PID controller is set to the basic value of the starting value generator (83) at the moment the control signal appears.

6

5. Control system as defined in one or more of Claims 1 to 4, in which the limiter (63) has different limiting thresholds for positive and negative input signals.

6. Control system as defined in Claim 5, in which the limiter (63) limits its input signal less in response to a brake demand than in response to a demand for brake release.

7. Control system as defined in Claims 5 to 6 for rail-bound vehicles, in which the effect of the limiter (63) can be varied as a function of the type, the length and the weight of the train.

8. Control system as defined in one or more of Claims 1 to 7, in which the input signal for the integral component of the FID controller is attenuated or amplified according to the sign of the control deviation.

9. Control system as defined in Claim 1, in which the differential component of the PID controller is only deactivated or reduced in its effect when its time derivative is positive in the case of a positive control leviation, or negative in the case of a negative control deviation.

10. Control system as defined in Claim 1, in which a limiter (76) is provided for the differential component of the PID controller.


## Revendications

1. Système de commande pour freins actionnés par fluide de véhicules à commande de freinage automatique, en particulier de véhicules à roues guidées, ce système de commande comprenant un régulateur d'accélération (43), caractérisé par le fait que le régulateur d'accélération (43) est un regulateur PID (proportionnel, intégral, différentiel), que la partie intégrante (intégrateur) du régulateur PID est limitée en temps de montée et de chute par un limiteur (63), que la valeur de départ de l'intégrateur est fixée, lors de la réponse du régulateur PID, à une valeur qui correspond à la valeur théorique instantanée de l'ordre de freinage au moment de la réponse du régulateur PID, et que la partie différentielle du régulateur PID (dérivateur) n'est efficace que si la valeur absolue de l'écart de réglage décroit.

2. Système de commande d'après revendication 1 caractérisé par le fait que le régulateur d'accélération (43) ne réagit seulement que si une durée prédéterminée s'est écoulée après un ordre de freinage.

3. Système de commande d'après revendication 2, caractérisé par le fait qu'un capteur de valeur initiale (63) est prévu qui, après un ordre de freinage, délivre une valeur théorique dont la variation dans le temps suit une fonction. predéterminée et qui donne, après écoulement d'un temps predéterminé, un signal de commande qui enclenche le régulateur d'accélération (43).

4. Système de commande d'après revendication 3, caractérisé par le fait que la valeur de depart de l'integrateur du regulateur PID est fixée à la valeur de sortie du capteur de valeur initiale (63) au moment de l'apparition du signal de commande.

5. Système de commande d'après l'une ou plusieurs des revendications 1 à 4, caractérisé par le fait que le limiteur (63) présente des valeurs-seuils de limitation différentes pour des signaux d'entrée positifs ou négatifs.

6. Système de commande d'après revendication 5, caractérisé par le fait que, lors d'un ordre de freinage, la limitation de son propre signal d'entrée par le limiteur (63) est moins grande que lors d'un ordre de desserrage du frein.

7. Système de commande d'après revendications 5 et 6 pour véhicules à roues guidées, caractérisé par le fait que l'efficacité du limiteur (63) est réglable en fonction du genre, de la longueur et du poids du train.

8. Système de commande d'après une ou plusieurs des revendications 1 à 7, caractérisé par le fait que le signal d'entrée destiné à l'intégrateur du régulateur PID est attenue ou amplifié en fonction du signe de l'ecart de réglage.

9. Système de commande d'après revendication 1, caractérisé par le fait que le dérivateur du régulateur PID devient inefficace, ou tout au moins présente une efficacité fortement réduite, lorsque sa dérivée par rapport au temps est positive pour un écart de réglage positif, ou bien lorsque sa dérivée par rapport au temps est négative pour un écart de réglage négatif.

10. Système de commande d'après revendication 1, caractérisé par le fait qu'un limiteur (76) est prévu pour le dérivateur du régulateur PID.

11. Système de commande d'après revendication 1, caractérisé par le fait que le signal de valeur réelle d'un régulateur de force de freinage (42) connecté après le régulateur d'accélération (43) est modifié par l'application d'un facteur (VF).

12. Système de commande, d'après revendication 11, caractérisé par le fait qu'un multiplicateur (80) est prévu, qui multiplie le signal de valeur réelle par le facteur (VF).

13. Système de commande d'après revendication 11, caractérisé par le fait que le signal de sortie du régulateur de force de freinage (42) est limité par un limiteur (62).

14. Système de commande d'après revendications 1 à 13, employé dans un système de conduite automatique des trains, caractérisé par le fait que dans une combinaison de freins séparés, actionnés par electricité et par fluide, le frein à commande par fluide possède un propre régulateur d'accélération (43), qui est disposé entre un régulateur de vitesse (36) et un régulateur de la force de freinage (42), dans lequel les systèmes de commande du frein électrique et du frein actionnés par fluide sont synchronisés par une logique de commande.

FIG 1

0 037 565

Fig. 2